Europäisches Patentamt

European Patent Office

Office européen des brevets

(11) Publication number: **0 370 518**
**A2**

## (12) EUROPEAN PATENT APPLICATION

(21) Application number: 89121713.5

(22) Date of filing: 24.11.89

(51) Int. Cl.⁵: **C08K 3/22, C08L 23/04,**
**//(C08L23/04,25:10,C08K3:22)**

(30) Priority: 25.11.88 JP 297897/88

(43) Date of publication of application:
30.05.90 Bulletin 90/22

(84) Designated Contracting States:
AT BE CH DE ES FR GB GR IT LI LU NL SE

(71) Applicant: NIPPON UNICAR COMPANY
LIMITED
Asahi-Tokai Building 6-1 Ohtemachi
2-Chome
Chiyoda-ku Tokyo 100(JP)

(72) Inventor: Horita, Katsuhiro
5-25-17, Take
Yokosuka-shi Kanagawa-ken(JP)
Inventor: Hayashi, Shoju
726-35, Shinbasi-cho Izumi-ku
Yokohama-shi Kanagawa-ken(JP)
Inventor: Koshiyama, Takao
2-29-15, Sagamidai
Sagamihara-shi Kanagawa-ken(JP)

(74) Representative: Weinhold, Peter, Dr.
Patentanwälte Dipl.-Ing. G. Dannenberg Dr.
P. Weinhold Dr. D. Gudel Dipl.-Ing. S.
Schubert Dr. P. Barz Siegfriedstrasse 8
D-8000 München 40(DE)

(54) Flame retardant composition.

(57) A composition comprising:
(i) a thermoplastic resin;
(ii) magnesium hydroxide, and
(iii) a hydrogenated styrene-butadiene copolymer.

EP 0 370 518 A2

## FLAME RETARDANT COMPOSITION

This invention relates to flame retardant compositions containing thermoplastic resins and a magnesium hydroxide filler. The compositions are particularly useful as insulation for wire and cable.

Thermoplastic resins, which have good electrical insulation characteristics, are widely used to provide insulating jacketing or sheaths for wire and cable. Recently, there has been a demand for improved flame retardant properties, e.g., as high as V-1 to V-0 using Underwriters Laboratories standards.

Thermoplastic resin can be made flame retardant by adding to the resin organic halides or antimony oxides, for example, or the resin itself can be halogenated such as polyvinyl chloride or chlorinated polyethylene. These thermoplastic resins, however, on burning, drip, sag, and emit large amounts of smoke and other harmful gases, and also corrode metals.

In order to solve these problems, it has been proposed to add metal hydroxides to non-halogenated thermoplastic resins. Aluminum hydroxide was first used because of its low cost, but it has such a low decomposition temperature (170° to 190°C) that the aluminum hydroxide decomposes generating water, which, in turn, causes foaming on interior surfaces. Furthermore, to obtain a flame retardance of V-1 to V-0, aluminum hydroxide has to be added to the thermoplastic resin in amounts of as much as 60 to 65 percent by weight based on the weight of the total composition.

Compared with aluminum hydroxide, magnesium hydroxide has a much higher decomposition temperature (about 360°C), and, thus, exhibits less foaming. For this reason, and others, magnesium hydroxide has been widely used as a flame retardant in resins. One disadvantage of a thermoplastic resin/magnesium hydroxide flame retardant composition, however, is that the magnesium hydroxide absorbs carbon dioxide from high humidity, high temperature atmospheres such as the atmosphere found in a cable tunnel. This results in the formation of magnesium hydroxycarbonate ($MgCO_3 \cdot Mg(OH)_2$), a white substance, on, for example, the surface of a wire or cable jacket. This "whitening" not only detracts from the appearance of the jacket, but also has a degrading effect insofar as arc resistance, insulation, mechanical, low temperature brittleness, and other properties are concerned.

An object of this invention, therefore, is to provide a composition, which is suitable as an insulating jacket for wire or cable, and, as a jacket, will not be susceptible to whitening caused by the chemical reaction of magnesium hydroxide, carbon dioxide, and water.

Other objects and advantages will become apparent hereinafter.

According to the invention, a composition has been discovered which meets the above objective. The composition comprises

(i) a thermoplastic resin;

(ii) magnesium hydroxide; and

(iii) a hydrogenated styrene-butadiene copolymer.

The thermoplastic resin can be any homopolymer or copolymer produced from two or more comonomers, or a blend of two or more of these polymers, conventionally used as jacketing and/or insulating materials in wire and cable applications. Generally, the monomers useful in the production of these homopolymers and copolymers will have 2 to 20 carbon atoms. Examples of such monomers are alpha-olefins such as ethylene, propylene, 1-butene, 1-hexene, 4-methyl-1-pentene, and 1-octene; unsaturated esters such as vinyl acetate, ethyl acrylate, methyl acrylate, methyl methacrylate, t-butyl acrylate, n-butyl acrylate, n-butyl methacrylate, 2-ethylhexyl acrylate, and other alkyl acrylates; diolefins such as 1,4-pentadiene, 1,3-hexadiene, 1,5-hexadiene, 1,4-octadiene, and ethylidene norbornene; other monomers such as styrene, p-methyl styrene, alpha-methyl styrene, vinyl naphthalene, and similar aryl olefins; nitriles such as acrylonitrile and methacrylonitrile; vinyl methyl ketone, vinyl methyl ether, and maleic anhydride; and acrylic acid, methacrylic acid, and other similar unsaturated acids. In addition to polyolefins, included among the polymers can be polyesters, polycarbonates, and polyurethanes. The homopolymers and copolymers of ethylene are preferred. The resins are preferably non-halogenated.

Examples of homopolymers and copolymers of ethylene are high pressure, low density Polyethylene; polyethylenes of various densities (high, medium, linear low, very low, and ultra-low) wherein the comonomer is 1-butene, 1-hexene, 4-methyl-1-pentene, or 1-octene; ethylene/propylene rubber; ethylene/propylene/diene monomer rubber; ethylene/vinyl acetate copolymer; ethylene/ethyl acrylate copolymer; isobutylene/isoprene rubber; and polybutene-1.

While conventional magnesium hydroxides can be used, a particularly preferred magnesium hydroxide and a method for its preparation are described in United States Patent No. 4,098,762 issued on July 4, 1978. Preferred characteristics for this magnesium hydroxide are (a) a strain in the <101> direction of no more than $3.0 \times 10^{-3}$; (b) a crystallite size in the <101> direction of more than 800 angstroms; and (c) a surface area, determined by the BET method, of less than 20 square meters per gram.

The average particle diameter of the magnesium hydroxide can be in the range of about 0.1 to about 15 microns and is preferably in the range of about 0.5 to about 3 microns. The surface area can be about 1 to about 20 square meters per gram and is preferably about 3 to about 8 square meters per gram. The magnesium hydroxide is preferably surface treated with various fatty acids or metallic salts of fatty acids such as stearic acid, sodium oleate, sodium stearate, sodium lauryl sulfonate, calcium stearate, or zinc stearate as described, for example, in United States patent 4,255,303.

The proportions of components in subject composition based on 100 parts by weight of thermoplastic resin are about as follows:

|  | Broad Range | Preferred Range |
|---|---|---|
|  | (parts by weight) | |
| Magnesium hydroxide | 5 to 450 | 100 to 250 |
| Hydrogenated styrenebutadiene copolymer | 1 to 80 | 30 to 60 |

The weight ratio of magnesium hydroxide to hydrogenated styrene-butadiene copolymer can be in the range of about 0.06:1 to about 450:1 and is preferably in the range of about 1.7:1 to about 8.3:1.

The styrene-butadiene copolymer is preferably a block copolymer and is hydrogenated by conventional techniques to essentially eliminate the unsaturation in the polymer chains. The styrene-butadiene copolymers can be prepared by anionic polymerization, cationic polymerization, coordination polymerization, radical polymerization, solution polymerization, or emulsion polymerization. The copolymers include various copolymers resulting resulting from the copolymerization of styrene and butadiene such as styrene-butadiene straight chain block copolymers; styrene-butadiene-styrene block copolymers; and styrene/butadiene/isoprene block copolymers. The weight ratio of styrene to butadiene in the copolymer can be in the range of about 0.4:1 to about 3:1 and is preferably in the range of about 0.7:1 to about 1.3:1. The molecular weight of the copolymer is generally in the range of about 50,000 to about 200,000 and is preferably in the range of about 80,000 to about 150,000. Other characteristics of the styrene-butadiene copolymer are as follows: the density of the styrene/butadiene copolymer can range from about 0.88 to about 0.96 grams per cubic centimeter and the melt index from about 1 to 10 grams per 10 minutes measured at 230°C under a 2.16 kilogram load.

Other useful additives for subject composition are surfactants, reinforcing filler or polymer additives, crosslinking agents, ultraviolet stabilizers, antistatic agents, pigments, dyes, slip agents, plasticizers, lubricants, viscosity control agents, extender oils, metal deactivators, water tree growth retardants, voltage stabilizers, flame retardant additives, and smoke suppressants.

Examples of antioxidants are: hindered phenols such as tetrakis[methylene(3,5-di-tertbutyl-4-hydroxyhydrocinnamate)]methane and thiodiethylene bis(3,5-di-tert-butyl-4-hydroxy)hydrocinnamate; phosphites and phosphonites such as tris(2,4-di-tert-butylphenyl)phosphite and di-tert-butylphenylphosphonite; various amines such as polymerized 2,2,4-trimethyl-1,2-dihydroquinoline; and silica. Antioxidants are used in amounts of about 1 to about 5 parts by weight per hundred parts by weight of thermoplastic resin.

The thermoplastic resin can be crosslinked by adding a crosslinking agent to the composition or by making the resin hydrolyzable, which is accomplished by adding hydrolyzable groups such as -Si(OR)$_3$ wherein R is a hydrocarbyl radical to the resin structure through copolymerization or grafting.

Suitable crosslinking agents are organic peroxides such as dicumyl peroxide; 2,5-dimethyl-2,5-di(t-butylperoxy)hexane; t-butyl cumyl peroxide; and 2,5-dimethyl-2,5-di(t-butylperoxy)hexane-3. Dicumyl peroxide is preferred.

Hydrolyzable groups can be added, for example, by copolymerizing ethylene with an ethylenically unsaturated compound having one or more -Si(OR)$_3$ groups such as vinyltrimethoxysilane, vinyltriethoxysilane, and gamma-methacryloxypropyltrimethoxysilane or grafting these silane compounds to the resin in the presence of the aforementioned organic peroxides. The hydrolyzable resins are then crosslinked by moisture in the presence of a silanol condensation catalyst such as dibutyltin dilaurate, dibutyltin diacetate, stannous acetate, lead naphthenate, and zinc caprylate. Dibutyltin dilaurate is preferred.

Examples of hydrolyzable copolymers and hydrolyzable grafted copolymers are ethylene/vinyltrimethoxy silane copolymer, ethylene/gamma-methacryloxypropyltrimethoxy silane copolymer, vinyltrimethoxy silane grafted ethylene/ethyl acrylate copolymer, vinyltrimethoxy silane grafted

3

linear low density ethylene/1-butene copolymer, and vinyltrimethoxy silane grafted low density polyethylene.

The composition of the invention can be extruded about, or coated on, an electrical conductor or subjected to injection, rotational, or compression molding.

In addition to being useful in wire and cable applications, subject composition can be used as a sheath for a glass core in fiber optics applications.

Commercial embodiments of the composition of the invention are generally obtained by mixing together the thermoplastic resin, the magnesium hydroxide, and the hydrogenated styrene-butadiene copolymer with one or more antioxidants and other additives in apparatus such as a Banbury mixer, a pressure kneader, a twin screw extruder, a Buss co-kneader, a Henschel mixer, or a roll kneader. The components can be added in any order and the components used in smaller amounts can be added via a masterbatch. The mixtures can then be extruded or subjected to injection molding, rotational molding, or compression molding.

In the examples, the performance of subject composition is evaluated by using a dumbbell specimen cut out of a sheet formed by compression molding the composition. The degree of whitening is determined by measuring the weight increase of a specimen exposed to a carbon dioxide gas stream containing moisture. The exposure is effected in a glass chamber having a volume of 50 cubic centimeters. The carbon dioxide is introduced into the chamber after bubbling through water at room temperature to provide a gas stream having a relative humidity higher than 90 percent.

The patents mentioned in this specification are incorporated by reference herein.

The invention is illustrated by the following examples.


## EXAMPLE 1


A composition is prepared by mixing the following components in a Banbury mixer at 160°C for 10 minutes:

(i) 100 parts by weight of an ethylene/ethyl acrylate copolymer having a melt index of 0.7 and containing 19 percent by weight ethyl acrylate;

(ii) 5 parts by weight of magnesium hydroxide surface treated with stearic acid;

(iii) 0.5 parts by weight tetrakis [methylene-3(3,5-di-tert-butyl-4-hydroxy phenyl) propionate] methane as an antioxidant;

(iv) 2.5 parts by weight carbon black; and

(v) 1 part by weight hydrogenated styrene-butadiene block copolymer.

The composition is pelletized and the resulting pellets are formed into a sheet measuring 1 millimeter thick, 150 millimeters in length, and 180 millimeters in width. The sheet is punched out to provide dumbbell specimens in accordance with (describe reference). The above whitening test is performed on the specimen. The results are set forth in the Table.

It is noted from the Table that it took 21 days for the specimen to increase in weight one percent. The results of the accelerated test suggest that it will take 3700 days (over ten years) for the specimen to incur the same weight increase when exposed to a normal atmosphere containing 0.03 percent by weight carbon dioxide. Thus, it can be said the subject composition has sufficient resistance to whitening caused by carbon dioxide gas for commercial applications.

In a visual test, it took 11 days before a white substance appeared on the surface of the specimen, and 25 days before the surface of the specimen was completely white. These periods in the accelerated test translate into 900 days and 4000 days, respectively, in a normal atmosphere containing 0.3 percent by weight carbon dioxide.


## EXAMPLES 2 TO 14


Example 1 is repeated except that components and amounts are varied. Variables and results are shown in the Table.


## EXAMPLES 15 TO 17


4

Example 1 is repeated except that components and amounts are varied. For comparative purposes, the amount of the hydrogenated styrene-butadiene block copolymer is less than 1 part by weight. Variables and results are shown in the Table.

5

## TABLE

(Components in Parts by Weight)

| Example | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| Ethylene/ethyl acrylate copolymer (1) | 100 | 100 | 100 | 100 | 100 | 100 | 100 | -- | -- | -- | -- | -- | -- | -- | 100 | 100 | -- |
| Ethylene/1-butene copolymer (2) | -- | -- | -- | -- | -- | 70 | 60 | 100 | 130 | 150 | 160 | 170 | 170 | 175 | -- | -- | 100 |
| Magnesium hydroxide (3) | 5 | 100 | 300 | 400 | 450 | 450 | 450 | 200 | 350 | 400 | 450 | 430 | 430 | 450 | 100 | 400 | 450 |
| Hydrogenated styrene-butadiene block copolymer (4) | 1 | 5 | 10 | 15 | 80 | 10 | 20 | -- | -- | -- | -- | -- | -- | -- | 0.1 | 0.5 | 0.5 |
| Hydrogenated styrene-butadiene block copolymer (5) | -- | -- | -- | -- | -- | -- | -- | 15 | 10 | 20 | 30 | 60 | 70 | 80 | -- | -- | -- |
| Antioxidant (6) | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Carbon black | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Evaluation (in days) | | | | | | | | | | | | | | | | | |
| Days for 1% by weight increase (7) | 21 | 17 | 18 | 16 | 20 | 17 | 18 | 20 | 19 | 21 | 22 | 23 | 23 | 25 | 10 | 7 | 5 |
| Days for partial whitening (8) | 11 | 7 | 9 | 8 | 10 | 8 | 9 | 10 | 10 | 11 | 11 | 12 | 12 | 13 | 4 | 2 | 1 |
| Days for overall whitening (8) | 25 | 21 | 22 | 20 | 24 | 21 | 22 | 24 | 23 | 25 | 26 | 28 | 27 | 29 | 6 | 4 | 3 |

Notes to Table:>

1. Melt index 0.7; 19% by weight ethyl acrylate.

2. Polyethylene made in the gas phase having a density of 0.906 gram per cubic centimeter.

3. Surface treated with stearic acid.

4. Ratio of styrene to butadiene by weight = 3:7; other characteristics of the copolymer: density = 0.93 g/cc, melt index = 1 g/10 min.

5. Ratio of styrene to butadiene by weight = 4:6; other characteristics of the copolymer: density = 0.93 g/cc, melt index = 1 g/10 min.

6. Tetrakis [methylene-3 (3,5-di-tert-butyl-4-hydroxyphenyl) propionate] methane.

7. Weight increase results from the reaction represented by the following equation:

$$4Mg(OH)_2 + 3CO_2 \rightarrow 3MgCO_3 \cdot Mg(OH)_2 \cdot 3H_2O$$

Conditions of accelerated test:

temperature = 15 to 30°C and relative humidity = 90% +.

8. The test is conducted by placing the specimen in a dessicator containing water vapor and carbon dioxide at 40°C and 90% relative humidity. The white substance appearing on the specimen is identified as magnesium hydroxycarbonate by infrared spectrometry, and this substance is in the form of needle crystals according to its electron micrograph.

## Claims

1. A composition comprising:
   (i) a thermoplastic resin; and
   (ii) magnesium hydroxide; and
   (iii) a hydrogenated styrene-butadiene copolymer.

2. The composition defined in claim 1 wherein the resin is not halogenated.

3. The composition defined in at least one of the claims 1 to 2 wherein the resin is an ethylene homopolymer or copolymer.

4. The composition defined in at least one of the claims 1 to 3 wherein the magnesium hydroxide is present in an amount of about 5 to about 450 parts by weight based on 100 parts by weight of resin.

5. The composition defined in at least one of the claims 1 to 4 wherein the magnesium hydroxide has an average particle diameter in the range of about 0.1 to about 15 microns and a surface area in the range of about 1 to about 20 square meters per gram.

6. The composition defined in at least one of the claims 1 to 5 wherein the hydrogenated styrene-butadiene copolymer is present in an amount of about 1 to about 80 parts by weight based on 100 parts by weight of resin.

7. The composition defined in at least one of the claims 1 to 6 wherein the weight ratio of magnesium hydroxide to hydrogenated styrene-butadiene copolymer is in the range of about 0.06:1 to about 450:1.

8. The composition defined in at least one of the claims 1 to 7 wherein the styrene butadiene copolymer is a block copolymer.

9. The composition defined in at least one of the claims 1 to 8 additionally containing an organic peroxide crosslinking agent, e.g. dicumyl peroxide.

10. The composition defined in at least one of the claims 1 to 9 wherein the resin is a hydrolyzable resin.

11. The composition defined in claim 10 wherein the resin contains one or more -Si(OR)$_3$ groups wherein R is a hydrocarbyl radical through copolymerization or grafting.

12. The composition defined in claim 11 wherein the silane groups are provided by a vinyltrialkoxy silane.

13. The composition defined in at least one of the claims 11 to 12 wherein the resin is a copolymer of ethylene and vinyl trimethoxy silane.

14. The composition defined in claim 11 wherein the silane compound which is copolymerized or grafted is an alkenyl alkoxy silane.

15. The composition defined in claim 14 additionally containing a silanol condensation catalyst, e.g. dibutyltin dilaurate.

16. An electrical conductor coated with the composition defined in at least one of the claims 1 to 15, e.g. a cable having an outer jacket comprising said composition.

17. The composition defined in at leastone of the claims 1 to 15 coated on, or extruded about, an electrical conductor.

18. A molded article comprising the composition defined in at least one of the claims 1 to 15.